# EUROPEAN PATENT APPLICATION

(11) **EP 4 579 939 A1**
(43) Date of publication of application: **02.07.2025**
(21) Application number: 24845731.9
(22) Date of filing: 22.04.2024
(51) Int. Cl.: H01M 50/593, H01M 50/588, H01M 50/30, H01M 50/502, H01M 50/211, H01M 50/249

(54) **BATTERY MODULE**

(30) Priority: 25.07.2023 KR 20230096978
(71) Applicant: LG Energy Solution, Ltd., Seoul 07335 (KR)
(72) Inventor: JUNG, Ki-Taek, Daejeon 34122 (KR)
(74) Representative: BCKIP Part mbB
(86) International application number: PCT/KR2024/005414
(87) International publication number: WO 2025/023427

(57) **Abstract**

Disclosed is a battery module. The battery module includes a case having an open front side and providing an inner space; a plurality of battery cells accommodated in the case; a bus bar frame assembly electrically connected to the plurality of battery cells and located on a front side of the plurality of battery cells; an end cover coupled to the open front side of the case; and an insulation cover located between the bus bar frame assembly and the end cover and coupled with the bus bar frame assembly.

## Description

### TECHNICAL FIELD

The present disclosure relates to a battery module.

The present application claims priority to Korean Patent Application No. 10-2023-0096978 filed on July 25, 2023 in the Republic of Korea, the disclosures of which are incorporated herein by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby. Therefore, if a thermal event occurring in a specific battery module is not properly controlled and a chain reaction occurs, it may cause not only significant property damage but also loss of life.

In addition, if a thermal event occurs, it is important to increase electrical safety by preventing current from being leaked as power of the battery cell is short-circuited with adjacent components even.

### DISCLOSURE

### Technical Problem

The present disclosure is designed to solve these and other problems.

The present disclosure is directed to providing a battery module with improved electrical safety when a thermal event occurs.

The present disclosure is also directed to providing a battery module that includes a structure that may maintain the electrical insulation state between an end cover and a battery cell when a thermal event occurs.

The present disclosure is also directed to providing a battery module that facilitates venting control when a thermal event occurs.

### Technical Solution

In one aspect of the present disclosure, there is provided a battery module, comprising: a case having an open front side and providing an inner space; a plurality of battery cells accommodated in the case; a bus bar frame assembly electrically connected to the plurality of battery cells and located on a front side of the plurality of battery cells; an end cover coupled to the open front side of the case; and an insulation cover located between the bus bar frame assembly and the end cover and coupled with the bus bar frame assembly.

In addition, the insulation cover may include a mica material.

In addition, the case may have a venting hole provided in an upper surface thereof.

In addition, the bus bar frame assembly may include a frame body configured to cover the front side of the case; and a bus bar provided on a front surface of the frame body and electrically connected to the battery cell, and the insulation cover may cover a front side of the bus bar entirely.

In addition, the bus bar frame assembly may include a hook that protrudes forward, and the insulation cover may be coupled to the hook.

In addition, the insulation cover may include an insulation plate having a flat plate shape; and, a hooking groove formed inward from one edge of the insulation plate, and the hook may pass through the hooking groove and be caught on a front surface of the insulation plate.

In addition, the end cover may have an accommodation portion formed on a rear surface thereof, and at least a part of the hook may be accommodated in the accommodation portion.

In addition, the battery module may further comprise a fastening member configured to couple the insulation cover to the bus bar frame assembly.

In addition, the end cover may be configured to support the insulation cover.

In addition, the end cover may include a first support that protrudes rearward, and the first support may cover a side of the insulation cover.

In addition, the insulation cover may include an insulation plate having a flat plate shape; and a second support configured to protrude rearward from an edge of the insulation plate, and the first support may be configured to face the second support.

In addition, the battery module may further comprise an adhesion member disposed between the end cover and the insulation cover.

A battery pack according to one aspect of the present disclosure may include the battery module of the present disclosure.

A vehicle according to another aspect of the present disclosure may include the battery module of the present disclosure.

### Advantageous Effects

According to at least one of the embodiments of the present disclosure, the electrical safety of the battery module may be improved.

According to at least one of the embodiments of the present disclosure, venting control of the battery module may be facilitated.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram illustrating a battery module according to an embodiment of the present disclosure.
FIG. 2 is an exploded view showing some components of the battery module according to an embodiment of the present disclosure.
FIG. 3 is a perspective view showing an insulation cover of the battery module according to an embodiment of the present disclosure.
FIG. 4 is a diagram showing the insulation cover of FIG. 3 viewed in a different direction.
FIG. 5 is an exploded view showing the insulation cover of the battery module according to an embodiment of the present disclosure.
FIG. 6 is a diagram showing the insulation cover of the battery module combined according to an embodiment of the present disclosure.
FIG. 7 is a perspective view showing an end cover of the battery module according to an embodiment of the present disclosure.
FIG. 8 is a diagram showing the end cover of FIG. 7 viewed in a different direction.
FIG. 9 is an exploded view showing the end cover of the battery module according to an embodiment of the present disclosure.
FIG. 10 is a diagram showing the end cover of the battery module combined according to an embodiment of the present disclosure.
FIG. 11 is a diagram schematically showing a part of the cross-sectional configuration along the cutting line A-A' in FIG. 10.
FIG. 12 is a diagram schematically showing a part of the cross-sectional configuration along the cutting line B-B' in FIG. 10.
FIG. 13 is a diagram schematically showing a part of the cross-sectional configuration along the cutting line C-C' in FIG. 10.
FIG. 14 is a diagram schematically showing a part of the cross-sectional configuration along the cutting line D-D' in FIG. 10.
FIG. 15 is a diagram showing the change in FIG. 14 when a thermal event occurs.
FIG. 16 is a diagram showing some components of a battery module according to another embodiment of the present disclosure.
FIG. 17 is an exploded view showing some components of the battery module according to still another embodiment of the present disclosure.
FIG. 18 is a diagram showing a modified example of FIG. 14.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

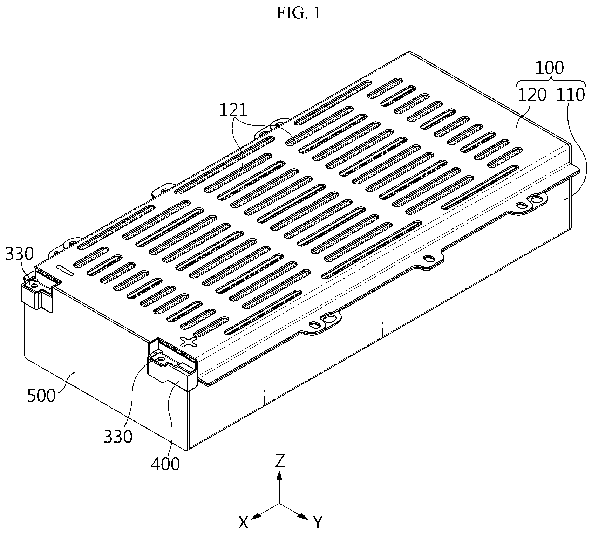

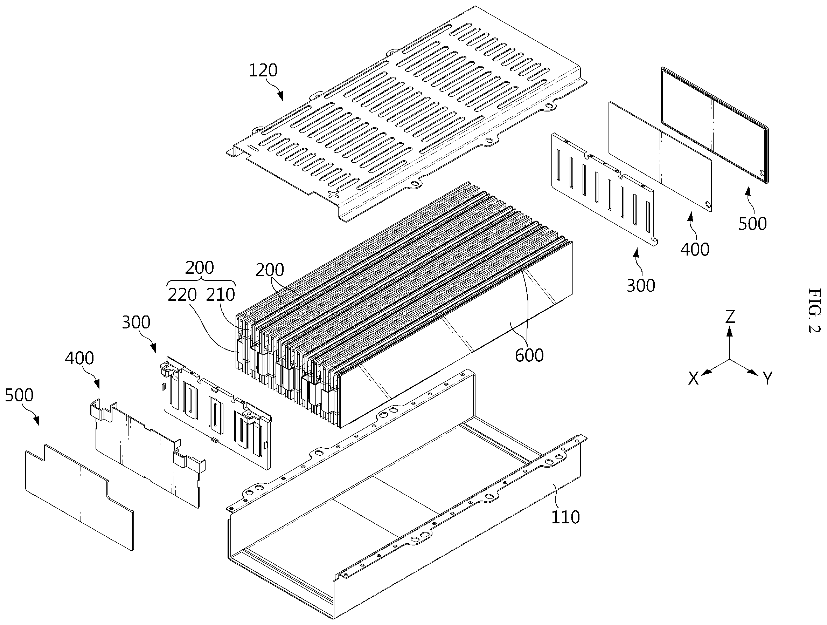

FIG. 1 is a diagram illustrating a battery module according to an embodiment of the present disclosure. FIG. 2 is an exploded view showing some components of the battery module according to an embodiment of the present disclosure. Referring to FIGS. 1 and 2, the battery module according to an embodiment of the present disclosure may include a case 100, a plurality of battery cells 200, a bus bar frame assembly 300, and an end cover 500 or an insulation cover 400.

The case 100 may include an upper case 120 and a lower case 110. The upper case 120 and the lower case 110 may be fastened, coupled, fixed, or attached. The case 100 may have a rectangular parallelepiped shape. The case 100 may have a shape where the front side and rear side are open. The case 100 may provide an inner space. Also, the case 100 may be formed integrally. The case 100 may include a metal material.

The plurality of battery cells 200 may be accommodated in the case 100. At this time, the battery cell 200 may mean a secondary battery. The battery cell 200 may be a pouch-type secondary battery. The plurality of battery cells 200 may be stacked in left and right directions. The battery cell 200 may include a body 210 and an electrode lead 220 protruding from the body 210 in front and rear directions. The electrode lead 220 may be provided at the front and rear sides of the body 210, respectively.

The battery module may additionally include a barrier 600. The barrier 600 may be disposed between the plurality of battery cells 200. Also, the barrier 600 may partition the plurality of battery cells 200. The barrier 600 may delay or prevent the propagation of flame, heat, gas, sparks, etc. when a thermal event occurs.

The bus bar frame assembly 300 may be electrically connected to the plurality of battery cells 200. The bus bar frame assembly 300 may be provided as a pair. The bus bar frame assembly 300 may be provided on the front side and the rear side of the plurality of battery cells 200, respectively. The pair of bus bar frame assemblies 300 may be electrically connected to the plurality of battery cells 200, respectively.

The end cover 500 may be provided as a pair. The end cover 500 may be coupled, fastened, or fixed to the open front side of the case 100. Also, the end cover 500 may be coupled, fastened, or fixed to the open rear side of the case 100. At this time, the end cover 500 and the case 100 may be coupled through welding. The end cover 500 may include a metal material.

The insulation cover 400 may be provided as a pair. The insulation cover 400 may be located between the bus bar frame assembly 300 and the end cover 500. The pair of insulation covers 400 may be coupled, fastened, attached, or fixed to the bus bar frame assembly 300, respectively.

According to this configuration of the present disclosure, the insulation cover 400 may be coupled with the bus bar 320, 330 to electrically insulate the end cover 500 and the bus bar frame assembly 300.

Referring to FIGS. 1 and 2, the insulation cover 400 of the battery module according to an embodiment of the present disclosure may include a mica material. At this time, the insulation cover 400 may be formed by processing a mica sheet at high temperature or high pressure. Also, the insulation cover 400 may be formed by overlapping a plurality of mica sheets and then processing them at high temperature or high pressure. The insulation cover 400 may be configured to have high rigidity.

According to this configuration of the present disclosure, the insulation cover 400 may maintain its shape without melting or being destroyed even if a thermal event occurs. Because of this, the insulation cover 400 may stably maintain the electrical insulation state of the bus bar frame assembly 300 and the end cover 500.

Referring to FIGS. 1 and 2, the case 100 of the battery module according to an embodiment of the present disclosure may have a venting hole 121 provided in the upper surface. The venting hole 121 may be provided in the upper case 120. The venting hole 121 may be provided in plurality.

According to this configuration of the present disclosure, even if a thermal event occurs, the insulation cover 400 may prevent or block venting gas or ignitable particles from being ejected in the front and rear directions of the battery module. Because of this, venting gas or ignitable particles may be discharged upward through the venting hole 121. Therefore, venting control may be facilitated by the insulation cover 400.

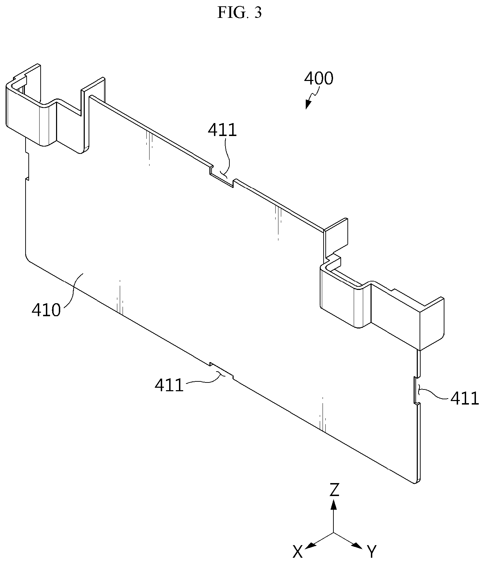

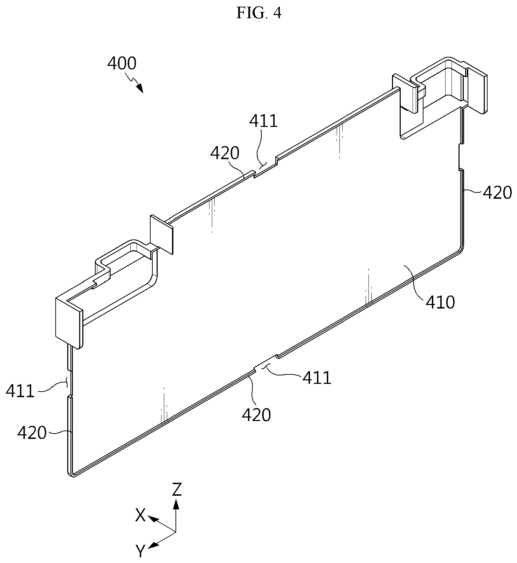

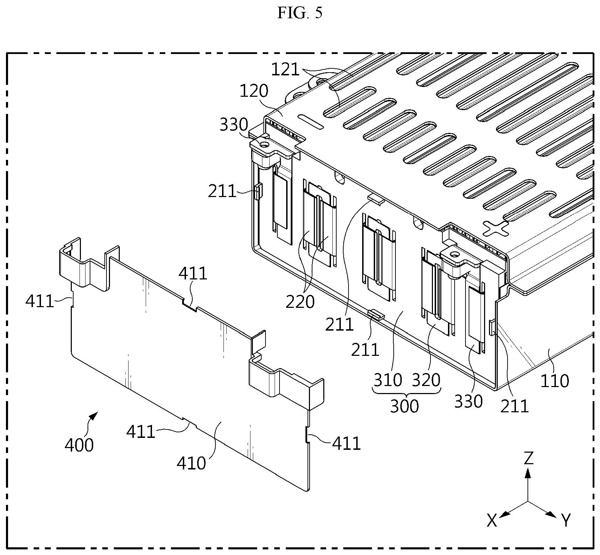

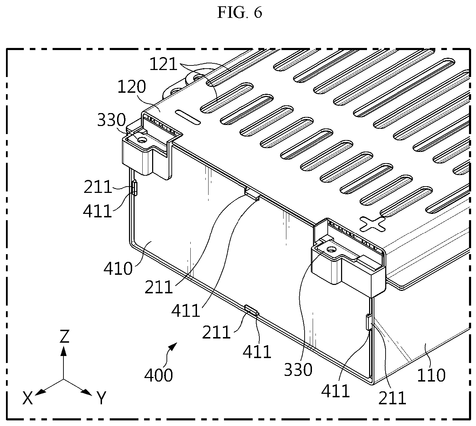

FIG. 3 is a perspective view showing an insulation cover 400 of the battery module according to an embodiment of the present disclosure. FIG. 4 is a diagram showing the insulation cover 400 of FIG. 3 viewed in a different direction. FIG. 5 is an exploded view showing the insulation cover 400 of the battery module according to an embodiment of the present disclosure. FIG. 6 is a diagram showing the insulation cover 400 of the battery module combined according to an embodiment of the present disclosure. Referring to FIGS. 3 to 6, the bus bar frame assembly 300 of the battery module according to an embodiment of the present disclosure may include a frame body 310 and a bus bar 320, 330.

The frame body 310 may be located on the front side or rear side of the plurality of battery cells 200. Also, the frame body 310 may cover the front side or rear side of the plurality of battery cells 200. The frame body 310 may be made of an electrically insulating material. For example, the frame body 310 may include a plastic material.

The bus bar 320, 330 may be provided on the frame body 310. The bus bar 320, 330 may be seated, fixed, fastened, coupled, or attached to the frame body 310. The bus bar 320, 330 may be provided on the front surface of the front frame body 310. Also, bus bar 320, 330 may be provided on the rear surface of the rear frame body 310. The bus bar 320, 330 may be electrically or physically connected to the plurality of battery cells 200. The bus bar 320, 330 may be coupled, fastened, attached, or welded to the electrode lead 220 of the plurality of battery cells 200. At this time, the bus bar 320, 330 may be used to commonly refer to an inter bus bar 320 and a terminal bus bar 330. The terminal bus bar 330 may output power from the battery module and receive external power. The terminal bus bar 330 may be electrically or physically connected to an external device. The terminal bus bar 330 may be provided as a pair. The inter bus bar 320 may be located between the pair of terminal bus bars 330. The inter bus bar 320 may be provided in plurality.

The insulation cover 400 may cover the front side of the bus bar 320, 330 of the front bus bar frame assembly 300. Because of this, the bus bar 320, 330 of the front bus bar frame assembly 300 may not be exposed to the outside. Also, the insulation cover 400 may entirely cover the rear side of the bus bar 320, 330 of the rear bus bar frame assembly 300. Because of this, the bus bar 320, 330 of the rear bus bar frame assembly 300 may not be exposed to the outside.

According to this configuration of the present disclosure, the insulation cover 400 may stably maintain the electrical insulation of the bus bar 320, 330 and the end cover 500.

Hereinafter, the present disclosure will be described based on the front bus bar frame assembly 300, the insulation cover 400, and the end cover 500. Referring to FIGS. 3 to 6, the bus bar frame assembly 300 of the battery module according to an embodiment of the present disclosure may include a hook 211 protruding forward. The hook 211 may protrude from the frame body 310. The hook 211 may be made of the same material as the frame body 310. Also, the hook 211 may be provided in plurality. The insulation cover 400 may be coupled, fastened, or fixed to the hook 211. The insulation cover 400 may be coupled, fastened, or fixed to the plurality of hooks 211.

According to this configuration of the present disclosure, the insulation cover 400 may be stably fixed in position. The insulation cover 400 may contain a mica material with high rigidity, and machining the insulation cover 400 into shape may be very limited. For example, forming a hook on the insulation cover 400 may be very limited. Also, if the end cover 500 is made of a metal material, shape processing may be very limited. For example, forming a hook on the end cover 500 may be very limited. Therefore, it may be desirable to form the hook 211 on the frame body 310 made of a material that is easy to form. By forming the hook 211 on the frame body 310, productivity and assembly of the battery module may be improved.

Referring to FIGS. 3 to 6, the insulation cover 400 of the battery module according to an embodiment of the present disclosure may include an insulation plate 410 and a hooking groove 411. The insulation plate 410 may have a flat plate shape. Also, the insulation plate 410 may have a rectangular shape as a whole. The hooking groove 411 may be formed inward from one edge of the insulation plate 410. The hooking groove 411 may be formed to penetrate the insulation plate 410. The hook 211 may pass through the hooking groove 411 and be caught on the front surface of the insulation plate 410. The hooking groove 411 may be provided in plurality. The hooking groove 411 may be provided to correspond to the hook 211 in one-to-one relationship. For example, four hooking grooves 411 and four hooks 211 may be provided, and the hooks 211 may be provided on the upper, lower, left, and right sides of the frame body 310, respectively. The bus bar 320, 330 may be located between the hooks 211.

According to this configuration of the present disclosure, the insulation cover 400 and the bus bar frame assembly 300 may be stably coupled.

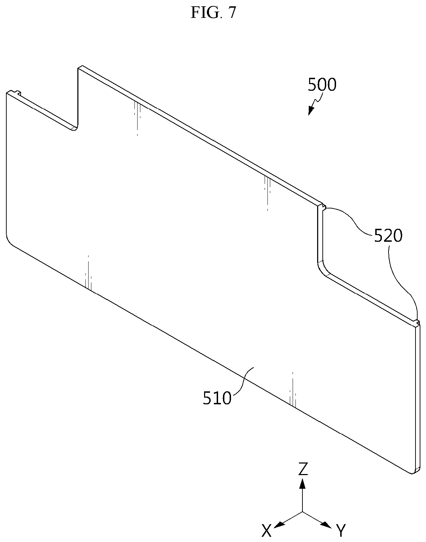

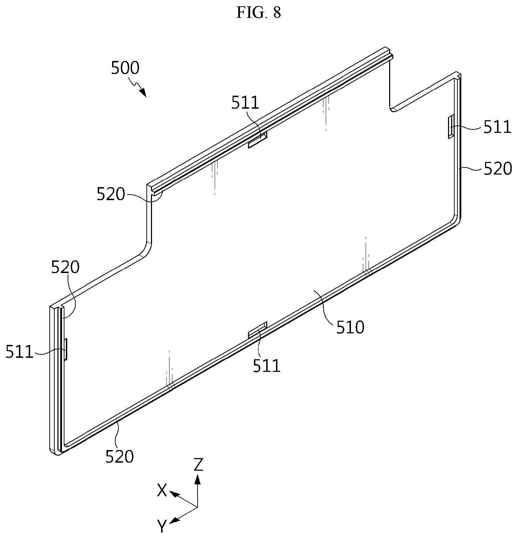

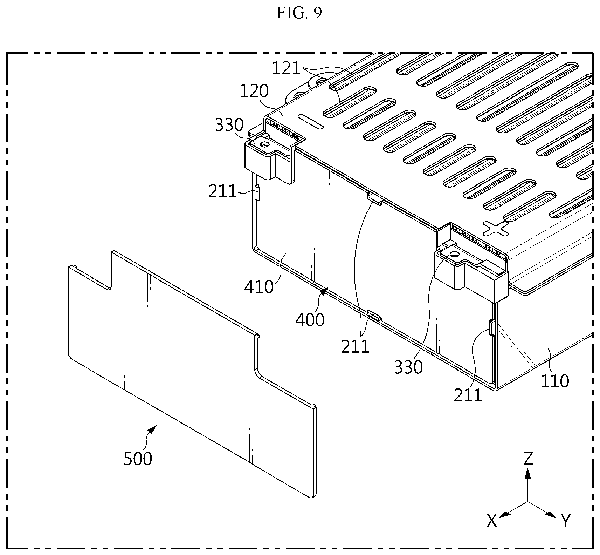

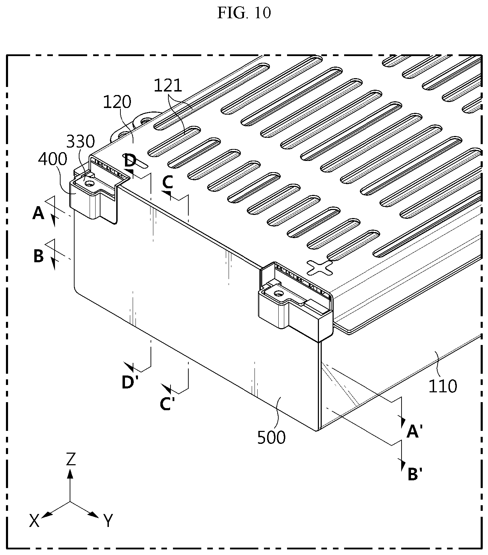

FIG. 7 is a perspective view showing an end cover 500 of the battery module according to an embodiment of the present disclosure. FIG. 8 is a diagram showing the end cover 500 of FIG. 7 viewed in a different direction. FIG. 9 is an exploded view showing the end cover 500 of the battery module according to an embodiment of the present disclosure. FIG. 10 is a diagram showing the end cover 500 of the battery module combined according to an embodiment of the present disclosure. Referring to FIGS. 7 to 10, the end cover 500 according to an embodiment of the present disclosure may include an end plate 510 having a flat plate shape.

The end cover 500 may include a first support 520 protruding from the rear surface of the end plate 510. Also, the end cover 500 may include an accommodation portion 511 formed on the rear surface. The accommodation portion 511 may be formed inside the first support 520. The accommodation portion 511 may be a groove. The accommodation portion 511 may not penetrate the end cover 500. The accommodation portion 511 may be provided in plurality. The plurality of accommodation portions 511 may be provided to correspond to the hooks 211 in one-to-one relationship. Also, the plurality of accommodation portions 511 may be positioned to correspond to the hooks 211. When the end cover 500 and the case 100 are coupled, at least a part of the hook 211 may be accommodated or inserted into the accommodation portion 511.

According to this configuration of the present disclosure, the gap between the insulation cover 400 and the end cover 500 may be reduced. Alternatively, the insulation cover 400 and the end cover 500 may be in close contact. Because of this, the energy density of the battery module may be improved.

Conventionally, a through hole is formed in the end cover 500 and the insulation cover 400 is fastened to the through hole. Because of this, when a thermal event occurs, there is a risk that venting gas or ignitable particles can be ejected through the through hole of the end cover 500.

Meanwhile, according to this configuration of the present disclosure, the end cover 500 does not have a through hole, so that venting gas or ignitable particles can be blocked from being ejected through the end cover 500 even if a thermal event occurs. Because of this, venting gas or ignitable particles can be discharged upward through the venting hole 121. Therefore, venting control may be facilitated by the end cover 500.

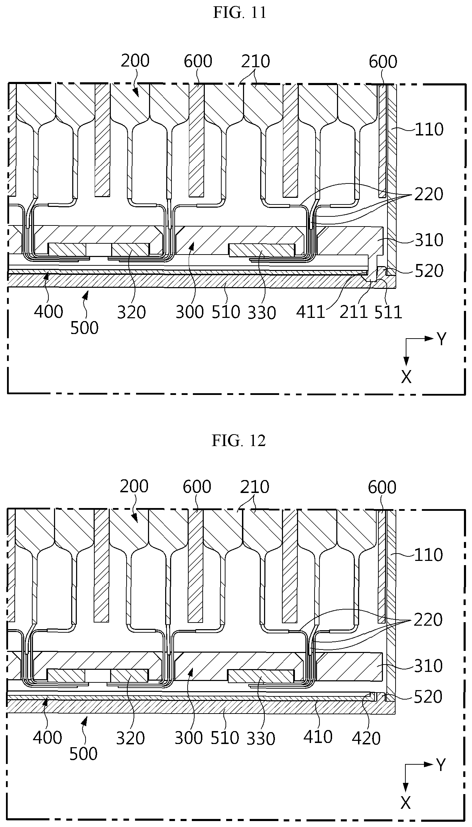

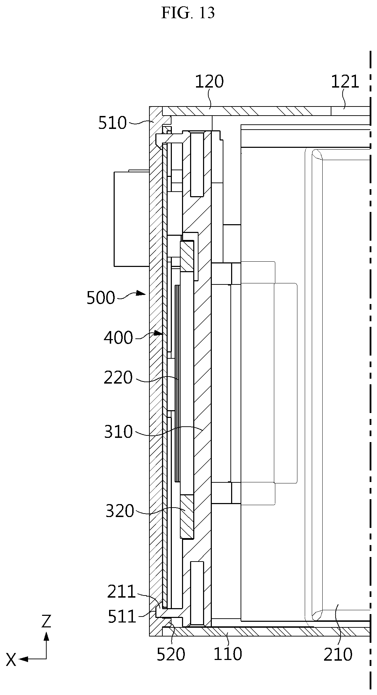

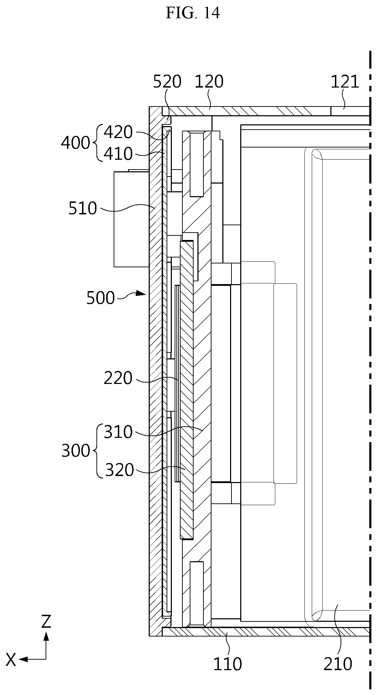

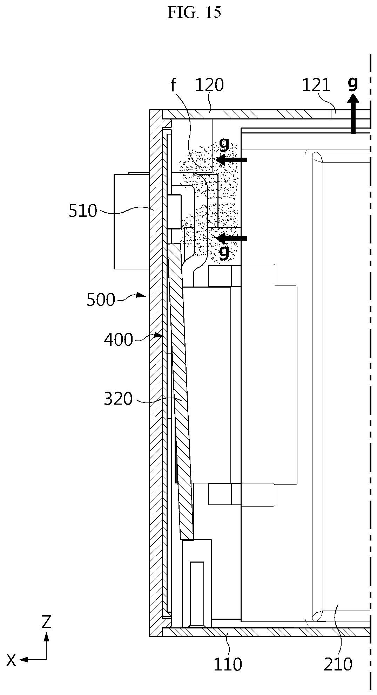

FIG. 11 is a diagram schematically showing a part of the cross-sectional configuration along the cutting line A-A' in FIG. 10. FIG. 12 is a diagram schematically showing a part of the cross-sectional configuration along the cutting line B-B' in FIG. 10. FIG. 13 is a diagram schematically showing a part of the cross-sectional configuration along the cutting line C-C' in FIG. 10. FIG. 14 is a diagram schematically showing a part of the cross-sectional configuration along the cutting line D-D' in FIG. 10. FIG. 15 is a diagram showing the change in FIG. 14 when a thermal event occurs.

Referring to FIGS. 10 to 15, the end cover 500 of the battery module according to an embodiment of the present disclosure may be configured to support the insulation cover 400. The end cover 500 may be in close contact with or located close to the insulation cover 400.

According to this configuration of the present disclosure, when a thermal event occurs, the fastening, fixing, coupling, and attachment structure of the insulation cover 400 and the bus bar frame assembly 300 may be damaged. By supporting the insulation cover 400, the end cover 500 may support the position of the insulation cover 400 not to be distorted. Because of this, the electrical and thermal safety of the battery module may be improved.

Referring to FIGS. 10 to 15, the end cover 500 of the battery module according to an embodiment of the present disclosure may include a first support 520 protruding rearward. The first support 520 may extend along the perimeter of the end cover 500. The first support 520 may cover the perimeter, side or edge of the insulation cover 400. Also, at least a part of the hook 211 may be inserted into the accommodation portion 511. The accommodation portion 511 may be located inside the first support 520. Also, the hook 211 may be located inside the first support 520.

Referring to FIG. 15, when a thermal event occurs, the fastening, fixing, coupling, and attachment structure of the insulation cover 400 and the bus bar frame assembly 300 may be damaged due to the ejected venting gas (g) and ignitable particles (f). Also, when a thermal event occurs, the bus bar 320, 330 may be separated from the frame body 310, and the bus bar 320, 330 may move toward the end cover 500.

According to this configuration of the present disclosure, the first support 520 of the end plate 510 supports the insulation cover 400, so that the position of the insulation cover 400 is not distorted. Because of this, the insulation cover 400 may block the end cover 500 and the bus bar 320, 330 from contacting each other.

Referring to FIGS. 10 to 15, the insulation cover 400 of the battery module according to an embodiment of the present disclosure may include an insulation plate 410 having a flat plate shape and a second support 420 protruding rearward from the edge of the insulation plate 410. The second support 420 may extend along the perimeter of the insulation cover 400. The first support 520 of the end cover 500 may face the second support 420.

According to this configuration of the present disclosure, the portion of the end cover 500 that supports the insulation cover 400 may be expanded. Alternatively, the contact area between the end cover 500 and the insulation cover 400 may be expanded. Because of this, the insulation cover 400 may be supported more stably by the end cover 500.

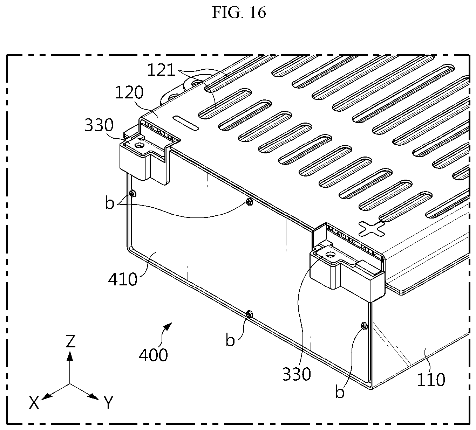

FIG. 16 is a diagram showing some components of a battery module according to another embodiment of the present disclosure. Referring to FIG. 16, the battery module according to another embodiment of the present disclosure may further include a fastening member b that couples the insulation cover 400 to the bus bar frame assembly 300. The fastening member b may penetrate the insulation plate 410 of the insulation cover 400. Also, the fastening member b may be fastened to the frame body 310. The fastening member b may include an electrically insulating material. Also, the fastening member b may be provided in plurality. The fastening member b may be provided on the upper, lower, left, and right sides.

According to this configuration of the present disclosure, the insulation cover 400 may be stably coupled, fastened, or fixed to the frame body 310. Also, because the fastening member b has electric insulation, electrical safety may be maintained even if the fastening member b separates and moves due to a thermal event.

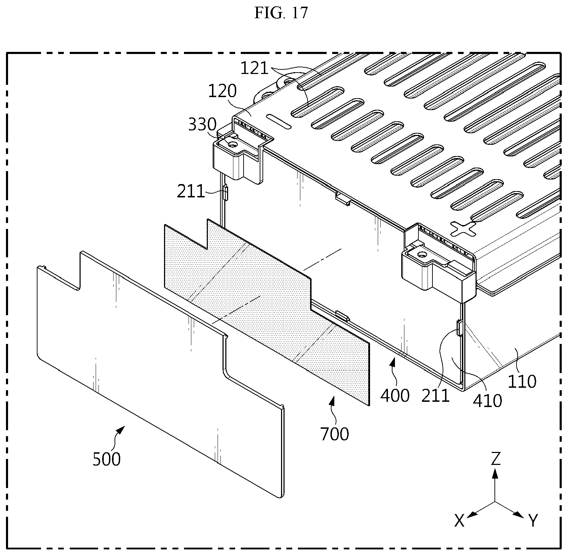

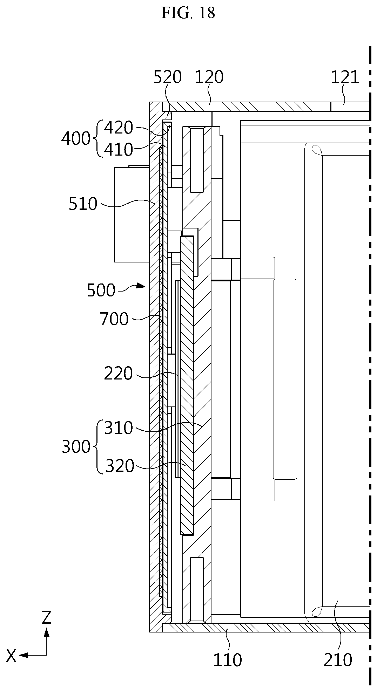

FIG. 17 is an exploded view showing some components of the battery module according to still another embodiment of the present disclosure. FIG. 18 is a diagram showing a modified example of FIG. 14. Referring to FIGS. 14, 17, and 18, the battery module according to still another embodiment of the present disclosure may further include an adhesion member 700 disposed between the end cover 500 and the insulation cover 400. The adhesion member 700 may fix the insulation cover 400 to the end cover 500. The adhesion member 700 may be provided on the front surface of the insulation plate 410. Alternatively, the adhesion member 700 may be provided on the rear surface of the end plate 510.

According to this configuration of the present disclosure, the portion of the end cover 500 that supports the insulation cover 400 may be expanded. Alternatively, the bonding strength between the end cover 500 and the insulation cover 400 may be strengthened. Because of this, the insulation cover 400 may be supported more stably by the end cover 500.

A battery pack according to the present disclosure may include the battery module according to the present disclosure described above. In addition, the battery pack according to the present disclosure may further include various other components in addition to the battery module according to the present disclosure, for example components of a battery pack known at the time of filing of this application, such as a BMS, a bus bar, a pack case, a relay, a current sensor, etc.

Meanwhile, the battery module and the battery pack may not be strictly distinct terms, and in some cases, the battery module and the battery pack may be used with the same meaning. For example, a battery pack that does not include a BMS may mean a battery module. Also, considering an embodiment of the battery module, when the battery module functions as a battery pack, the battery module may mean a battery pack.

A vehicle according to the present disclosure may include the battery module according to the present disclosure described above. The battery module according to the present disclosure may be applied to vehicles such as electric vehicles or hybrid vehicles. In addition, the vehicle according to the present disclosure may further include various other components included in a vehicle, such as a body, a motor, and a control device like an ECU (electronic control unit), in addition to the battery module.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module, comprising:
a case having an open front side and providing an inner space;
a plurality of battery cells accommodated in the case;
a bus bar frame assembly electrically connected to the plurality of battery cells and located on a front side of the plurality of battery cells;
an end cover coupled to the open front side of the case; and
an insulation cover located between the bus bar frame assembly and the end cover and coupled with the bus bar frame assembly.

2. The battery module according to claim 1,
wherein the insulation cover includes a mica material.

3. The battery module according to claim 1,
wherein the case has a venting hole provided in an upper surface thereof.

4. The battery module according to claim 1,
wherein the bus bar frame assembly includes:
a frame body configured to cover the front side of the case; and
a bus bar provided on a front surface of the frame body and electrically connected to the battery cell,
wherein the insulation cover covers a front side of the bus bar entirely.

5. The battery module according to claim 1,
wherein the bus bar frame assembly includes a hook that protrudes forward, and
wherein the insulation cover is coupled to the hook.

6. The battery module according to claim 5,
wherein the insulation cover includes:
an insulation plate having a flat plate shape; and,
a hooking groove formed inward from one edge of the insulation plate,
wherein the hook passes through the hooking groove and is caught on a front surface of the insulation plate.

7. The battery module according to claim 5,
wherein the end cover has an accommodation portion formed on a rear surface thereof, and
wherein at least a part of the hook is accommodated in the accommodation portion.

8. The battery module according to claim 1, further comprising:
a fastening member configured to couple the insulation cover to the bus bar frame assembly.

9. The battery module according to claim 1,
wherein the end cover is configured to support the insulation cover.

10. The battery module according to claim 1,
wherein the end cover includes a first support that protrudes rearward, and
wherein the first support covers a side of the insulation cover.

11. The battery module according to claim 10,
wherein the insulation cover includes:
an insulation plate having a flat plate shape; and,
a second support configured to protrude rearward from an edge of the insulation plate,
wherein the first support is configured to face the second support.

12. The battery module according to claim 1, further comprising:
an adhesion member disposed between the end cover and the insulation cover.

13. A battery pack, comprising the battery module according to any one of claims 1 to 12.

14. A vehicle, comprising the battery module according to any one of claims 1 to 12.
